# EUROPEAN PATENT SPECIFICATION

(11) **EP 3 347 323 B1**
(45) Date of publication and mention of the grant of the patent: **09.07.2025**
(21) Application number: 16766068.7
(22) Date of filing: 09.09.2016
(51) Int. Cl.: C03C 17/42, C03C 17/34

(54) **DEPOSITION PROCESS**
ABLAGERUNGSVERFAHREN
PROCÉDÉ DE DÉPÔT

(30) Priority: 09.09.2015 GB 201515985
(43) Date of publication of application: 18.07.2018
(73) Proprietor: Pilkington Group Limited, Nr. Ormskirk, Lancashire L40 5UF (GB)
(72) Inventor: HURST, Simon James, Runcorn Cheshire WA7 1QW (GB); GLYNN, Mark John, St Helens Merseyside WA10 5EU (GB); OLIVER, Simon Paul, Chester Cheshire CH3 5RN (GB)
(74) Representative: Teasdale, Nicola Joanne
(86) International application number: PCT/GB2016/052803
(87) International publication number: WO 2017/042585

(56) References cited:
- US-A1- 2005 084 718

## Description

The present invention relates to processes for producing coated glass substrates and to glass substrates having such coatings on at least one surface. The present invention also relates to glazings comprising such coated glass substrates, in particular automotive and architectural glazings.

Coatings on substrates especially glass substrates may be used to modify the properties of the substrate. A number of methods may be used to deposit coatings including many liquid based methods such as spin coating, dip coating, spray coating and various printing techniques.

JPH-A-05105486 discloses a liquid crystal indicator formed from a glass base plate coated with a liquid containing at least one kind of polysilazane subsequently hardened by heating and/or UV irradiation to form a silica-based film free from voids, pinholes and cracks and forming a transparent conductive film on the silica-based film.

US 2005/0279255 Al discloses applying a coating solution comprising a polysilazane onto the surface of base materials such as metals, plastics, glass, ceramic, wood, cement, mortar, bricks to form a silica coating adhered to the base material.

US 2015/0060444 Al discloses a sol-gel solution including a polysilazane and an organic solvent which is applied to the exterior surface of a glass container for example a glass bottle to form a silica coating on the exterior surface.

JPH-A-112812 discloses a conductive substrate which is lightweight and has high heat resistance and rigidity and is made by forming a reflection layer containing a white pigment and resin, a silica barrier layer produced from polysilazane having a cyclic structure, and a conductive layer on one main surface of the laminate plate formed of a fibre cloth impregnated with thermosetting resin.

JPH-A-1048864 discloses a photoreceptor having high light transmission produced by applying a sol-gel material or a polysilazane and firing to form a glass layer and successively depositing thereon a light transmitting conductive layer and a photosensitive layer composed of a charge transfer layer containing a charge producing material.

US 2005/084718 A1 relates to an infrared shielding film-coated glass in which the infrared shielding film is formed from a first film layer on the surface of the glass based on transparent electroconductive oxide fine particles dispersed in a silicon oxide matrix, and a second film layer laminated on the first film layer and comprising silicon oxide, silicon oxynitride or silicon nitride.
One other particularly useful method for deposition of coatings is chemical vapour deposition (CVD) wherein a fluid precursor in the form of a vapour is delivered to the surface of the substrate where the precursors react and/or decompose thereby depositing a coating. Particular types of CVD include metal organic (MO) CVD, combustion (C) CVD, plasma enhanced (PE) CVD and aerosol-assisted (AA) CVD.

Useful CVD coatings include metal oxides, for example, tin oxide. Some metal oxides including doped tin oxide (for example fluorine doped tin oxide), indium tin oxide and doped zinc oxide (for example aluminium doped zinc oxide) can form transparent conductive oxide (TCO) coatings. Coatings with sheet resistance values less than about 1,500 to 1,000 Ω / square are generally considered to be conductive coatings. A coating of pure stoichiometric tin oxide on a glass substrate would generally have an extremely high sheet resistance. In some circumstances, tin oxide coatings may have a sheet resistance of about 350 - 400 Ω per square due, at least partly, to oxygen deficiency in the tin oxide, rendering it conductive. Fluorine and other elements may be used as dopants in order to increase the conductivity of tin oxide.

By lowering the sheet resistance, or increasing the conductivity, of a coated glass sheet, the emissivity of a coated glass article is reduced since the emissivity of a coated glass article is related to its sheet resistance. TCO coated glass may thus be used as low emissivity glass which provides superior thermal control properties to glazings by limiting the transmission of infrared wavelengths through the glass while maintaining high transmission of visible light.

TCO coated glass may also be used in resistively heated glazings, for example for automotive backlights. Currently, most heatable glazings use conductive ceramic tracks to provide heating elements. Such tracks are visible to the user. With the general increase in power available in automotive glazing applications (voltages available in vehicles now include 42 V or 48 V) it is becoming commercially viable to provide heatable glazings using TCO coated glass and therefore having no visible elements. Such heatable glazings would be advantageous since TCO coated glass (especially glass coated by CVD) is extremely durable. However, there is a need to reduce the risk of short-circuits in the exposed electrically conductive coating and also to provide enhanced safety when using such coatings in for example automotive and architectural glazings.

Furthermore, TCO coatings may have a rough surface (leading to haze) and the materials comprising the TCO coatings are relatively hard. Contacting such hard, rough coatings in use in either an architectural or automotive glazing, with a softer material such as for example softer metals used in jewellery, may cause the softer material to be abraded and leave deposits in or on the TCO coating, and hence marks on the glazing which are difficult to remove or clean and hence detract from the overall performance of the glazing.

Specular-haze or haze may be considered as a milky or finely dappled spot pattern covering the majority of the surface of a coated glass. Its nature appears to be predominantly, but not completely, specular rather than diffuse. This means the patterns can frequently have a strong angular component to their behaviour, that is, if the illumination and observer's viewing angle is at normal incidence the specular-haze may be strongly apparent whereas if the illumination moves to a very different angle, such as 45°, it may not be. If the haze is low or evenly and randomly distributed on a coated glass, this is not usually a problem. However, if the haze is concentrated into patterns, or has regions of very high haze, the haze becomes visually distracting and is unacceptable. These localised and/or non-uniform patterns in the haze may take the form of patches, spots or blotches. It is important therefore that any automotive and/or architectural glazings excellent light transmission and acceptable low haze levels and which do not detract from the overall appearance of the glazing.

It is an aim of the present invention to address these issues and provide glazings for both the architectural and automotive industries which meet the evermore stringent requirements of the end use.

In a first aspect, the present invention accordingly provides a process for producing a coated substrate, the process comprising providing a glass substrate having at least one surface, the surface having deposited thereon a layer of a transparent conductive material, preferably a transparent conductive oxide, providing a coating composition comprising a polysilazane, contacting the surface of the transparent conductive oxide with the coating composition, and curing the coating composition on the surface of the substrate thereby forming a layer comprising silica.
That is according to a first aspect of the present invention there is provided
a process for producing a coated glass substrate for use in automotive and architectural glazing, the process comprising:
i) providing a glass substrate having at least one surface, the surface having deposited thereon a layer of a transparent conductive material, wherein the transparent conductive material comprises a transparent conductive oxide;
ii) providing a coating composition comprising a polysilazane;
iii) contacting a surface of the layer of transparent conductive material with the coating composition; and
iv) curing the coating composition to form a coating layer on the surface of the transparent conductive material the coating layer comprising silica, and wherein the transparent conductive oxide before deposition of the layer of silica, has an average surface roughness, (Sa1), greater than the average surface roughness, (Sa2), of the silica coated glass substrate, wherein:
   the transparent conductive oxide is deposited by chemical vapour deposition (CVD); and
   the layer of a transparent conductive material has a sheet resistance in the range 5 Ω/square to 400 Ω/square.
The transparent conductive material comprises a transparent conductive oxide. In accordance with the first aspect of the present invention the transparent conductive oxide may comprise indium tin oxide, doped tin oxide, doped zinc oxide or a mixture of two or more of these oxides. Other possible TCOs include: tin oxide, zinc oxide, alkali metal (potassium, sodium or lithium) stannates, zinc stannate, cadmium stannate or a mixture of two or more oxides. However, a preferred transparent conductive oxide comprises doped tin oxide, more preferably fluorine doped tin oxide.

Also in accordance with the first aspect of the present invention the transparent conductive oxide is deposited by chemical vapour deposition (CVD).

This process is advantageous because, surprisingly, the cured layer comprising silica derived from polysilazane provides a hard, planarised surface on the transparent conductive material (TCM), preferably TCO layer, significantly reducing its roughness. The reduction in roughness also reduces the haze of the substrate and greatly reduces the risk of marking of the substrate by abrasion. Furthermore, even though the TCM coating may be rough, the layer comprising silica provides an insulating over-layer.

The transparent conductive oxide coating before deposition and curing of the layer of silica, has an average surface roughness, (Sa1) as determined according to ISO 25178, and defined therein as the arithmetical mean height) greater than the average surface roughness, (Sa2), of the cured silica coating layer applied to the glass substrate.

Preferably, the transparent conductive oxide coating before deposition and curing of the layer of silica, may have an average surface roughness, (Sa1), at least 5 nm greater than the average surface roughness, (Sa2), of the cured silica coating layer applied to the glass substrate.

More preferably, the transparent conductive oxide coating before deposition and curing of the layer of silica, may have an average surface roughness, (Sa1), at least 8 nm greater than the average surface roughness, (Sa2), of the cured silica coating layer applied to the glass substrate.

Most preferably the transparent conductive oxide coating before deposition and curing of the layer of silica, has an average surface roughness, (Sa1), at least 10 nm greater than the average surface roughness, (Sa2), of the cured silica coating layer applied to the glass substrate.

The coating composition may usually comprise a solvent.

Suitable solvents for polysilazane may be organic solvents which contain no water and no reactive groups (that is, no hydroxyl or amine groups). For example, aliphatic or aromatic hydrocarbons, halogenated hydrocarbons, esters, such as ethyl acetate or butyl acetate, ketones, such as acetone or methyl ethyl ketone, ethers, such as tetrahydrofuran or dibutyl ether, and mono- and polyalkylene glycol dialkyl ethers (glymes) or mixtures of these solvents.

Preferably, the coating composition may comprise an aprotic solvent. The more preferred aprotic solvents may include one or more of those selected from dibutyl ether, t-butyl methyl ether, tetrahydrofuran, butane, pentane, hexane, cyclohexane, 1,4-dioxane, toluene, xylene, anisole, mesitylene, 1,2-dimethoxybenzene, diphenyl ether or a mixture of two or more of these solvents. More preferably the solvent mixture may comprise two or more solvents selected from dibutyl ether, t-butyl methyl ether, tetrahydrofuran, butane, pentane, hexane, cyclohexane, 1,4-dioxane, toluene, xylene, anisole, mesitylene, 1,2-dimethoxybenzene, diphenyl ether. A preferred solvent comprises a dialkyl ether. In addition, the solvent may preferably comprise dibutyl ether, toluene, xylene, mesitylene and/or mixtures thereof.

The coating composition may further comprise a catalyst, selected, for example, from organic amines, organic acids and metals or metal salts, or mixtures of these compounds.

Catalysts, if present, may preferably be used in amounts of from: 0.001 to 10%; especially from 0.01 to 6%; and more preferably from 0.1 to 3%, wherein the percentage of catalyst present (%) is based on the weight of the polysilazane.

Examples of suitable amine catalysts may include: ammonia, methylamine, dimethylamine, trimethylamine, ethylamine, diethylamine, triethylamine, n-propylamine, isopropylamine, di-n-propylamine, diisopropylamine, tri-n-propylamine, n-butylamine, isobutylamine, di-n-butylamine, diisobutylamine, tri-n-butylamine, n-pentylamine, di-n-pentylamine, tri-n-pentylamine, dicyclohexylamine, aniline, 2,4-dimethylpyridine, 4,4-trimethylenebis(1-methylpiperidine), 1,4-diazabicyclo[2.2.2]octane, N,N-dimethylpiperazine, cis-2,6-dimethylpiperazine, trans-2,5-dimethylpiperazine, 4,4-methylenebis(cyclohexylamine), stearylamine, 1,3-di(4-piperidyl)propane, N,N-dimethylpropanolamine, N,N-dimethylhexanolamine, N,N-dimethyloctanolamine, N,N-diethylethanolamine, 1-piperidinethanol, 4-piperidinol.

Examples of suitable organic acids catalysts may include: acetic acid, propionic acid, butyric acid, valeric acid, caproic acid.

Examples of suitable metals and metal compounds catalysts may include: palladium, palladium acetate, palladium acetylacetonate, palladium propionate, nickel, nickel acetylacetonate, silver powder, silver acetylacetonate, platinum, platinum acetylacetonate, ruthenium, ruthenium acetylacetonate, ruthenium carbonyls, gold, copper, copper acetylacetonate, aluminum acetylacetonate, aluminum tris(ethylacetoacetate).

In relation the first aspect of the present invention the layer of transparent conductive oxide comprises a sheet resistance in the range 5 Ω/square to 400 Ω/square.

The sheet resistance of TCO coatings (especially fluorine doped tin oxide coatings) may be modified by changing the thickness of the coating (generally a thicker coating has lower sheet resistance), changing the nature or amount of dopant, or by varying the temperature of the glass substrate during deposition.

Also in relation to the first aspect of the present invention the polysilazane may preferably be a compound of formula (R¹R²Si-NR³)ₙ, wherein R¹, R², and R³ are each independently selected from H or C₁ to C₄ alkyl, and n is an integer. n may be such that the polysilazane has a number average molecular weight in the range 150 to 150,000 g/mol.

The polysilazane may preferably comprise perhydropolysilazane (PHPS), wherein each of R¹, R², and R³ are H. Alternatively the polysilazane may comprise a methyl polysilazane wherein one or more of R¹, R², and R³ is methyl. A preferred methyl polysilazane is wherein each of R¹, R², and R³ is methyl (referred to herein as MPS).

Alternative types of polysilazane may include a compound of formula ( (R⁴R⁵Si-NR⁶)ₒ - (R⁷R⁸Si-NR⁹)ₚ or of [(R⁴R⁵Si-NR⁶] - [R⁷R⁸Si-NR⁹)]_{q}, wherein R⁴, R⁵, R⁶, R⁷ R⁸, and R⁹ are each independently selected from H or C₁ to C₄ alkyl, o, p and q are integers.
o, p and q may be such that the polysilazane has a number average molecular weight in the range 150 to 150,000 g/mol.

It is preferred that in relation to the first aspect of the present invention that the surface of the transparent conductive material is contacted with the coating composition by a method selected from: dip coating; spin coating; roller coating; spray coating; air atomisation spraying; ultrasonic spraying; and/or slot-die coating. More preferably, the surface of the transparent conductive material is contacted with the coating composition by either spin coating, roller coating, spray coating or slot-die coating and/or combinations thereof.

To improve coating quality it is advantageous that the process further comprises cleaning the surface of the coated glazing before contacting the coated surface with an additional silica composition. Cleaning the surface may comprise one or more of: abrasion with ceria, washing with alkaline aqueous solution, deionised water rinse and/or plasma treatment. Cleaning removes any unwanted dust or dirt particles which may have collected prior to application of the additional silica layer.

When the polysilazane contacts the surface of the transparent conductive oxide and also contacts water and oxygen (for example by way of the moist air), the polysilazane will react to form silica by hydrolysis and loss of ammonia.

The inventors have found that in relation to the present invention the curing step of the deposited silica is advantageous as it may improve the density of the silica layer and speed of hydrolysis/reaction.

Curing the coating composition on the surface of the substrate may comprise irradiating with ultraviolet radiation usually of a wavelength of 200 nm or below for between several minutes and up to 1 hour. Alternatively or additionally, curing may be by heating and/or the use of IR lamps.

Thus, curing the coating composition on the surface of the substrate may comprise heating to a temperature range from: 90 °C to 650 °C; or in the range from 110 °C to 650 °C or in the range from 95 °C to 550 °C; or in the range from 110 °C to 500 °C. Preferably curing the coating composition may take place at a temperature in the range from 130 °C to 550 °C. More preferably curing the coating composition takes place at a temperature in the range from 150 °C to 500 °C, or at a temperature in the range from 150°C to 400 °C. Most preferably however, curing the coating composition takes place at a temperature in the range from 150°C to 350 °C, or at a temperature in the range from 150°C to 300 °C.

Also in relation to the first aspect of the present invention the nature of the curing temperature may also vary depending on the method by which the transparent conductive material is contacted with the coating composition, that is, whether the transparent conductive oxide is applied by spin coating, roller coating, spray coating or slot-die coating and/or combinations thereof.

When the transparent conductive oxide is applied by spin coating, the silica coating is preferably cured for between 1 and 2 hours, more preferably for around 1 hour at a temperature in the range of 90 °C to 650 °C; or in the range from 110 °C to 550 °C; or in the range from 300 °C to 550 °C. Most preferably however, curing the coating composition takes place at a temperature in the range from 400°C to 550 °C. There curing process may include a heating up period of around 1 hour and a cooling down period of between 5 and 10 hours in addition to the curing of around 1 hour.

When the transparent conductive oxide is applied by spray coating, the silica coating is preferably cured for between 1 and 2 hours, more preferably for around 1 hour at a temperature in the range of 90 °C to 650 °C; or in the range from 110 °C to 550 °C; or in the range from 120 °C to 550 °C. Most preferably however, curing the coating composition takes place at a temperature in the range from 150°C to 550 °C. There curing process may include a heating up period of around 1 hour and a cooling down period of around 2 to 3 hours. It is also preferred that when the transparent conductive oxide is applied by spray coating, the silica coating is preferably cured using IR and UV lamps.

When the transparent conductive oxide is applied by roller coating, the silica coating is preferably cured for between 1 and 2 hours, more preferably for around 1 hour at a temperature in the range of 90 °C to 400 °C; or in the range from 100 °C to 300 °C; or in the range from 120 °C to 250 °C. Most preferably however, curing of the coating composition applied by roller coating may take place at a temperature in the range from 150°C to 250 °C. There curing process may include a heating up period of around 1 hour and a cooling down period of around 2 to 3 hours. In addition, the curing of the transparent conductive oxide applied by roller coating may be performed using mercury discharge lamps or may alternatively be performed using convectively heated ovens.

When the transparent conductive oxide is applied using a slot die coater, the silica coating is preferably cured for between 1 and 2 hours, more preferably for around 1 hour at a temperature in the range of 90 °C to 400 °C; or in the range from 100 °C to 300 °C; or in the range from 120 °C to 250 °C. Most preferably however, curing of the coating composition applied using the slot die coater may take place at a temperature in the range from 150°C to 250 °C. There curing process may include a heating up period of around 1 hour and a cooling down period of around 2 to 3 hours. Curing is preferably performed using convectively heated ovens.

The concentration of polysilazane in the coating composition may be adjusted to an appropriate level. Using a coating composition of relatively high concentration may be used to deposit a relatively thick layer comprising silica. Thus, the polysilazane may be at a concentration in the range 0.5% to 80% by weight in the coating composition.

Preferably the polysilazane may be at a concentration in the range from 0.5% to 20% by weight. More preferably the polysilazane may be at a concentration in the range 0.5% to 10% by weight. Most preferably the polysilazane may be at a concentration in the range 1% to 5% by weight.

In addition, the process according to the first aspect of the present invention may be controlled for example by adjusting the concentration, volume applied, number of applications, and/or time of application of the coating composition, to vary the thickness of the deposited layer comprising silica.

Thus, the process of the present invention may be performed so that the layer comprising silica is deposited to a thickness in the range: 10 nm to 5 µm, or 10 nm to 2.5 µm or 10nm to 700 nm.

Preferably the process of the present invention may be performed so that the layer comprising silica is deposited to a thickness in the range: 10 nm to 500 nm; or to a thickness in the range 10 nm to 300nm.

More preferably however, the process of the present invention may be performed so that the layer comprising silica is deposited to a thickness in the range: 10 nm to 200nm; or to a thickness in the range 10 nm to 150nm.

Even more preferably the process of the present invention may be performed so that the layer comprising silica is deposited to a thickness in the range: 10 nm to 80nm; or to a thickness in the range 15 nm to 75nm; or to a thickness in the range 15 to 70nm.

Most preferably however, the process of the present invention may be performed so that the layer comprising silica is deposited to a thickness in the range: 15 nm to 65nm; or to a thickness in the range 15 to 60nm; or to a thickness in the range 15 to 50nm; or to a thickness in the range 25 nm to 45nm.

It is especially preferred that for the process of the present invention performed using the roller coating process, the layer comprising silica is deposited to a thickness in the range: 10 nm to 130nm; or to a thickness in the range 10 to 100nm; or to a thickness in the range 15 to 90nm; or to a thickness in the range 15 nm to 88nm.

It is especially preferred that for the process of the present invention performed using the slot dye coating process, the layer comprising silica is deposited to a thickness in the range: 10 nm to 130nm; or to a thickness in the range 10 to 110nm; or to a thickness in the range 15 to 110nm; or to a thickness in the range 15 nm to 105nm.

A thickness of between 20 nm 50nm may also be preferred whether the transparent conductive oxide is applied by spin coating, roller coating, spray coating or slot-die coating and/or combinations thereof.

The process may be such that the layer comprising silica comprises: 1 atom % to 8 atom % nitrogen; often 1 atom % to 6 atom % nitrogen; and usually 1.2 atom % to 4.5 atom % nitrogen. The nitrogen may be derived from the polysilazane precursor.

The present invention also provides a process according to the first aspect of the present invention comprising the steps of depositing a layer of fluorine doped tin oxide by chemical vapour deposition on float glass and wherein a cured layer of silica is deposited on the layer of fluorine doped tin oxide and wherein the arithmetic mean height of the deposited cured silica layer is less than 50% of the arithmetic mean height of the fluorine doped tin oxide layer, more preferably less than 65%, and most preferably less than 70% of arithmetic mean height of the fluorine doped tin oxide layer.

The glass substrate is preferably a float glass substrate and usually a substantially flat glass substrate. It is also possible that the glass substrate may subsequently be shaped after the coating composition has been applied.

The process produces a coated glass substrate that may be used in a variety of glazings. In particular the coated glass substrate may be used in: vehicle glazings for example. automotive, train, water vessel, aircraft; and/or in architectural glazings such as for example windows or doors; and/or as glass in white goods for example freezers or refrigerators, and/or in glass in display counters or in display cabinets.

The present invention accordingly provides in a second aspect, a coated glass substrate comprising a layer of transparent conductive oxide and a layer of silica deposited on the layer of transparent conductive oxide obtainable by the process according to each of the features of the first aspect of the present invention as described above.

As discussed above, a major advantage of the present invention is that it significantly reduces the external roughness of a transparent conductive material (TCM) or transparent conductive oxide (TCO) coated glass with consequent advantages in reducing haze, and/or the risk of marking and also provides an insulating coating on the TCM or TCO layer.

Thus, in a third aspect, the present invention provides a coated glass substrate comprising a coated glass substrate comprising a layer of transparent conductive oxide and a cured layer of silica deposited on the layer of transparent conductive oxide, wherein the transparent conductive oxide coating before deposition of the layer of silica, may comprise an average surface roughness, Sa, greater than the average surface roughness, Sa, of the silica coated glass substrate.

More preferably, the transparent conductive oxide coating before deposition of the layer of silica, comprises an average surface roughness, Sa: at least 5nm greater than the average surface roughness, Sa, of the silica coated glass substrate; or at least 8nm greater than the average surface roughness, Sa, of the silica coated glass substrate; or at least 5nm greater than the average surface roughness, Sa, of the silica coated glass substrate.

Also in relation to the third aspect of the present invention there is provided a glass substrate comprising a layer of fluorine doped tin oxide deposited by chemical vapour deposition wherein a cured layer of silica is deposited on the layer of fluorine doped tin oxide and wherein the arithmetic mean height of the deposited cured silica layer is less than 50% of the arithmetic mean height of the fluorine doped tin oxide layer, more preferably less than 65% and most preferably less than 70% of arithmetic mean height of the fluorine doped tin oxide layer.

The present invention provides in a fourth aspect, an automotive glazing comprising a coated glass substrate according to each of the features of the second or third aspect of the present invention.

The present invention provides in a fifth aspect, an architectural glazing comprising a coated glass substrate according to each of the features of the second or third aspect of the invention.

The present invention will now be described by way of example only, and with reference to, the accompanying drawings, in which:
Figure 1 (a) is a scanning electron micrograph (SEM) of Example 1, Figure 1 (b) is a scanning electron micrograph (SEM) of Example 6.
Figure 2 (a) is a scanning electron micrograph (SEM) of Example 7, Figure 2 (b) is a scanning electron micrograph (SEM) of Example 11.

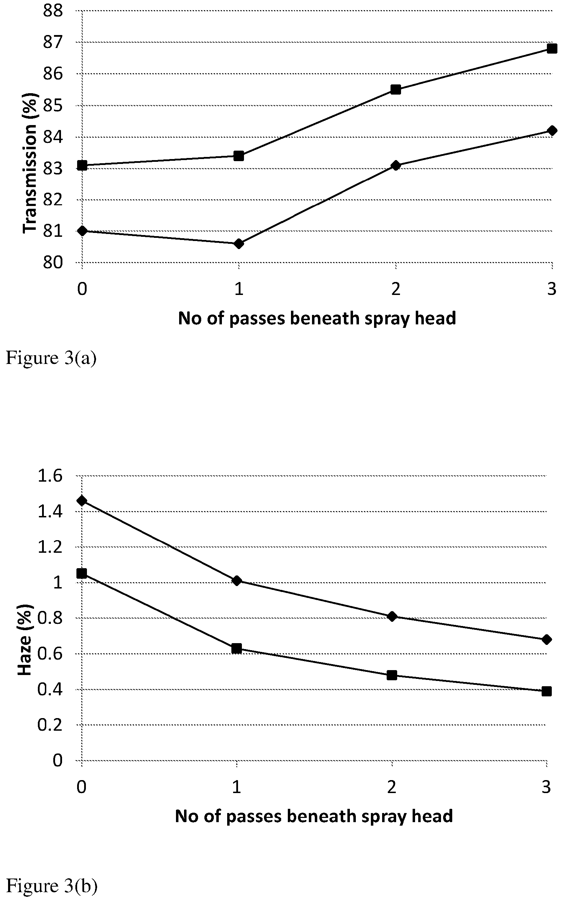

Figure 3a is a graph of transmission versus number of passes beneath a spray head for Examples 12 to 17 (diamonds - Examples 12-14, squares - Examples 15-17) and
Figure 3(b) is a graph of haze as a function of number of passes beneath a spray head for Examples 12 to 17 (diamonds - Examples 12-14, squares - Examples 15-17).

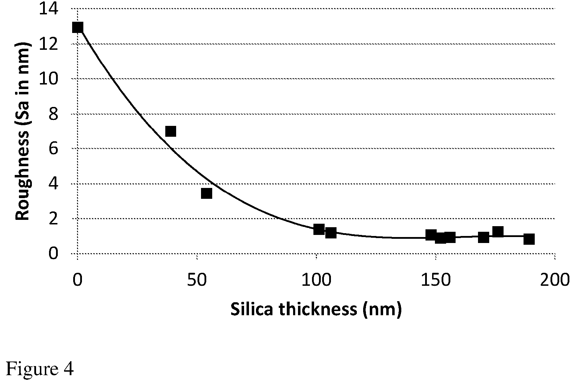

Figure 4 is a graph of surface roughness (Sa) as a function of silica coating thickness (nm) for spray deposited samples according to the invention.

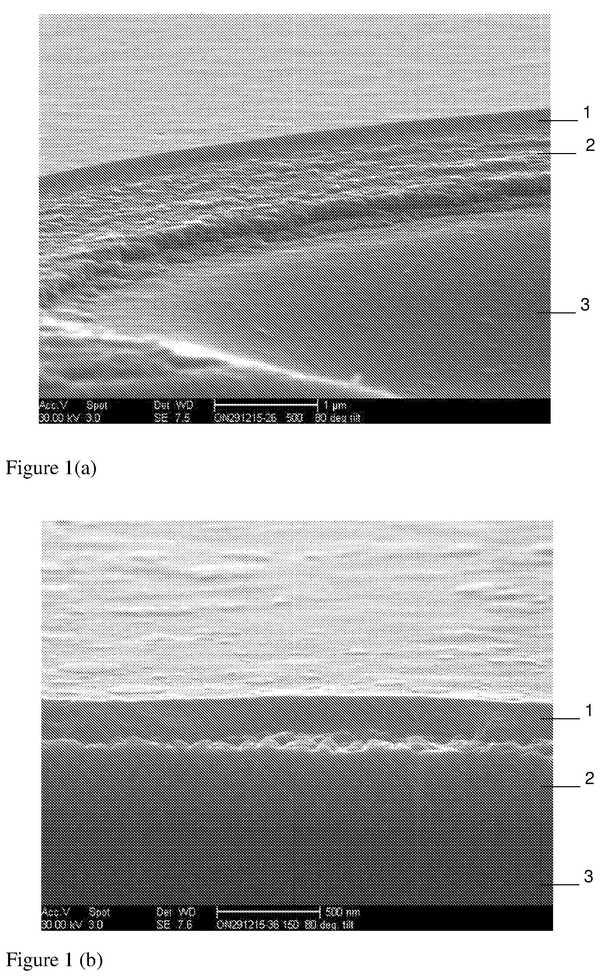

As mentioned above, Figure 1(a) is a scanning electron micrograph (SEM) of Example 1 prepared using a spray deposition method and wherein silica derived from PHPS is cured at a temperature of 500 °C for one hour. The glass substrate is indicated by 3, the fluorine doped tin oxide coating layer by 2 and the cured silica layer derived from a coating composition of PHPS is denoted by 1. As seen in Figure 1a, the cured silica layer provides a smoothing layer on top of the fluorine doped tin oxide coating layer.

Figure 1(b) is a scanning electron micrograph (SEM) of Example 6, also prepared using a spray deposition method but cured at a temperature of 150 °C for one hour. The glass substrate is indicated by 3, the fluorine doped tin oxide coating layer by 2 and the cured silica layer derived from a coating composition of PHPS is denoted by 1. As seen in Figure 1a, the cured silica layer provides a smoothing layer on top of the fluorine doped tin oxide coating layer.

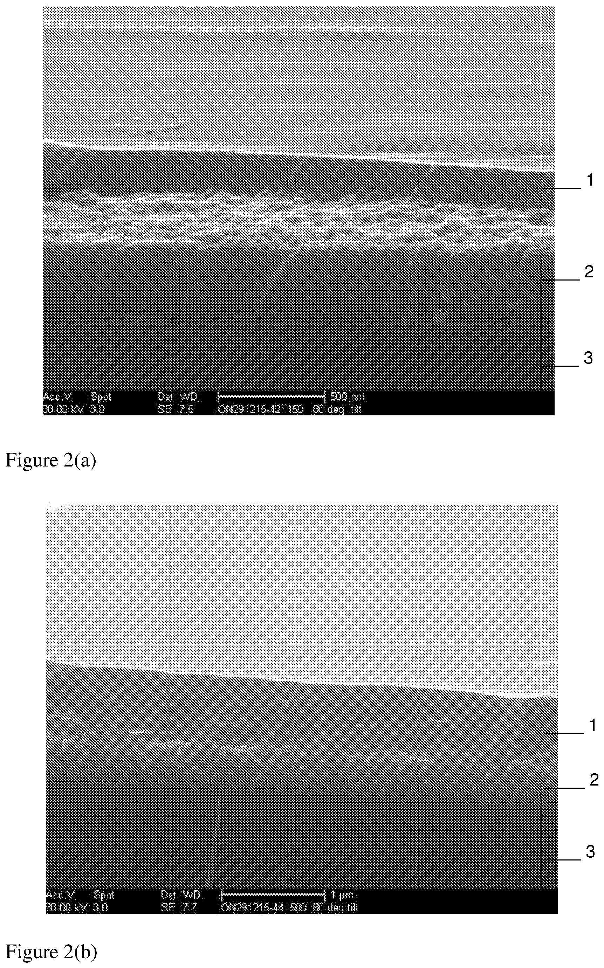

Figure 2 (a) is a scanning electron micrograph (SEM) of Example 7, prepared using a spray deposition method and in which the silica layer derived from methylpolysilazane (MPS) is cured at a temperature of 150 °C for one hour. The glass substrate is indicated by 3, the fluorine doped tin oxide coating layer by 2 and the cured silica layer derived from a coating composition of methyl polysilazane is denoted by 1. As seen in Figure 2a, the cured silica layer provides a smoothing layer on top of the fluorine doped tin oxide coating layer.

Figure 2 (b) is a scanning electron micrograph (SEM) of Example 11 prepared using a spray deposition method and cured at a temperature of 500 °C for one hour. The glass substrate is indicated by 3, the fluorine doped tin oxide coating layer by 2 and the cured silica layer derived from a thicker coating composition of methylpolysilazane (MPS) is denoted by 1. As seen in Figure 2b, the cured silica layer provides a smoothing layer on top of the fluorine doped tin oxide coating layer.

The invention will now be further illustrated, but not limited, by the following Examples.

### Scanning Electron Microscopy

Scanning electron microscopy (SEM) was performed using a Philips XL30 FEG operating in plan and cross-section mode at varying instrument magnification and tilt angle.

### Electrical properties

The sheet resistance of the Examples was determined using a surface resistivity meter with a 4-point probe (Guardian Model SRM 232). Measurements were taken at the same thickness for each sample, and the mean of three measurements was taken.

### Atomic Force Microscope

AFM (Bruker, Nanoscope Dimension Icon) was used to determine the roughness of samples including average surface roughness, Sa and Sq (as determined according to ISO 25178-No. 2 Aerial Specification Standard, published 2012, Sa being defined therein as the arithmetical mean height of the surface).

### Substrates

In the Examples, substrates of float glass coated with fluorine doped tin oxide (as the outer layer) were prepared and subsequently coated with layers comprising silica using polysilazane in dibutyl ether.

The coated glass substrates were of the form glass/undoped SnO₂/SiO₂/F doped SnO₂ and differed in the thickness of the doped tin oxide layer (as conveniently indicated by measuring sheet resistance, a thicker coating yielding lower sheet resistance). The following procedure describes the deposition of the doped tin oxide layer of the 15 Ω / square substrate. The other substrates were produced in a similar way varying the thickness of the doped tin oxide coating and hence the sheet resistance.

The fluorine-doped tin dioxide layer is deposited using an on-line CVD coating process. This is done during the float glass production process with the temperature of the glass substrate at 600 to 650° C. A tin-containing precursor, in the form of dimethyltin dichloride (DMT), is heated to 177° C and a stream of carrier gas, in the form of helium, is passed through the DMT. Gaseous oxygen is subsequently added to the DMT/helium gas stream. At the same time, a fluorine-containing precursor, in the form of anhydrous hydrogen fluoride (HF), is heated to 204 °C. Additional water is added to create a mixture of gaseous HF and water. The two gas streams are mixed and delivered to the hot glass surface at a rate of around 395 litres/minute. The ratio of DMT to oxygen to HF is 3.6:61.3:1. The thickness of the resulting fluorine-doped tin oxide layer is approximately 3200 Å and it has a nominal sheet resistance of about 15 Ω/square.

### Silica Coatings

Silica coatings were deposited using a 20% by weight stock solution in dibutyl ether (DBE) of perhydropolysilazane (PHPS) or methylpolysilazane MPS available from Merck. During coating operations the stock solution was diluted with DBE at ratios ranging from 1:1 to 1:12. Adding DBE reduces the thickness of the resulting silica coating.

The glass substrate surface was cleaned prior to coating using combinations of ceria scrub, 2% KOH wash, deionised water rinse and air dry. Plasma treatment may also be required to remove remaining organic contaminants from the surface to reduce the contact angle (<5°).

In the following comparative examples and examples the coating solution of polysilazane was applied to the substrate surface by either:
i) spin coating; or
ii) spray coating; or
iii) roller coating; or
iv) slot die coating,
followed by curing using heat for example from IR lamps or at a temperature in the region of 200 °C for 1 hour, or ultraviolet radiation for example short wavelength UV 200 nm using a mercury or iron discharge lamp, to give a silica coating. The silica coated substrate was then tested for optical properties, durability (to architectural EN1096 and automotive TSR 7503G standards) and to show resistive heating.

### Spin Coated Comparative Examples 1 to 8

These comparative Examples were conducted to evaluate coating thickness as a function of concentration of perhydropolysilazane (PHPS) solution.

Volumes of about 2 ml of PHPS solution in dibutyl ether (DBE) of varying concentration were applied to a float glass substrate. The substrate was spin coated at an acceleration of 1000 rpm/s to 2000 rpm. The substrates were subsequently heated for 1 hour at 500 °C which consisted of a 1 hour heating up period, a 1 hour holding period at 500 °C, and a cool down period of around 8 hours. The results are presented in Table 1.

**Table 1**

| Comparative Example | Concentration of PHPS in coating solution. (weight %) | Silica film thickness (nm) |
|---|---|---|
| 1 | 7.6 | 21.7 |
| 2 | 9.7 | 26.1 |
| 3 | 15.8 | 40.2 |
| 4 | 18.9 | 46.5 |
| 5 | 32.3 | 83.8 |
| 6 | 37.3 | 97.7 |
| 7 | 48.7 | 132.7 |
| 8 | 55.7 | 153.2 |

### Spray Coated Examples 1 to 20.

Fluorine doped tin oxide (SnO₂:F) coated glass substrates having a sheet resistances of either 6 Ω/square, 10 Ω/squareor 15 Ω/square were coated by a spray process from atomizer spray heads with 0.015 inch/0.06 mm fluid orifices, 0.2 bar to 3 bar liquid pressure range, and 2.6 to 10 litres/hour liquid delivery using a coating composition of PHPS in DBE or methylpolysilazane (MPS) in DBE, each of concentration 7.6 weight %. The substrates were at room temperature during deposition. Prior to deposition the substrates were cleaned using a ceria scrub and deionisied water. Spray deposition for each pass lasted for 2 or 3 seconds. Spray heads were 15 to 38 mm above the substrate during spraying. Curing of the silica after spraying was conducted by heating the coated glass to various temperatures (Examples 1 to 11), using a near-IR lamp (50% power) at a conveyor speed of 6 m/minute and 8 UV passes using a Jenton UV lamp (approximately 200 nm wavelength, 90% power) and conveyor with a speed of 2.1 m/minute. The volume of the spray was approximately 260 ml and the spray head separation was 10 to 15 cm. Pole to pole distance was 52 cm. The relative motion of the substrate and heads was 12 cm/minute.

The spray coated samples all formed excellent silica coatings, exhibiting significantly reduced roughness of the surface of the substrates. Further results are described below.

### Examples 1 to 11.

In examples 1 to 11 silica was spray deposited onto coated glass substrates with a sheet resistance of 15 Ω/square. Examples 1 to 6 were deposited using perhydropolysilazane (PHPS) in dibutylether (DBE). Examples 7 to 11 were deposited using methylpolysilazane (MPS) in dibutylether (DBE). The results of analysis of Examples 1 to 6 are shown in Table 2 and the results for Examples 7 to 11 in Table 3.

**Table 2**

| **Example** | **Actual(averaged) SEM Thickness (nm)** | **1 Hour Cure Temp (°C)** | **ISO9050 Tvis (%)** | **Haze (%)** | **Contact Angle (°)** | **AFM Sa (nm) 5µm²** | **AFM Sq (nm) 5µm²** |
|---|---|---|---|---|---|---|---|
| 1 | 170 | 500 | 85.0 | 0.39 | 43.3 | 0.93 | 1.20 |
| 2 | 189 | 500 | 85.2 | 0.41 | 51.3 | 0.82 | 1.02 |
| 3 | 156 | 300 | 84.6 | 0.44 | 82.4 | 0.92 | 1.23 |
| 4 | 176 | 300 | 86.7 | 0.46 | 76.7 | 1.25 | 1.68 |
| 5 | 106 | 150 | 84.3 | 0.44 | 102.1 | 1.18 | 1.60 |
| 6 | 148 | 150 | 87.3 | 0.36 | 88.2 | 1.06 | 1.47 |
| SnO₂:F Substrate | 0 | 0 | 84.4 | 0.95 | 55.8 | 12.94 | 16.13 |
| Float glass | | | | | | 0.25 | |

| | | | | | | | |
|---|---|---|---|---|---|---|---|
| AFM Sa - Atomic Force Microscope average surface roughness value AFM Sq - Atomic Force Microscope average root mean square height | | | | | | | |

**Table 3**

| **Example** | **Actual (averaged)SEM Thickness (nm)** | **1 Hour Cure Temp (°C)** | **ISO9050 Tvis (%)** | **Haze (%)** | **Contact Angle** | **AFM Sa (nm) 5µm²** | **AFM Sq (nm) 5µm²** |
|---|---|---|---|---|---|---|---|
| 7 | 187 | 150 | 85.8 | 0.38 | 76.7 | 0.64 | 0.95 |
| 8 | 195 | 300 | 87.0 | 0.35 | 88.2 | 0.94 | 1.85 |
| 9 | 482 | 300 | 87.6 | 0.33 | 82.4 | 0.67 | 1.19 |
| 10 | 187 | 500 | 86.5 | 0.38 | 82.4 | 0.76 | 1.14 |
| 11 | 632 | 500 | 87.6 | 0.39 | 47.1 | 0.36 | 0.67 |
| SnO₂:F Substrate | 0 | 0 | 84.4 | 0.95 | 55.8 | 12.94 | 16.13 |
| Float Glass | | | | | | 0.25 | |

In examples 12 to 17, silica was spray deposited onto coated glass substrates with sheet resistances of 6 Ω/square (Examples 12, 13 and 14) or 10 Ω/square (Example 15, 16, 17) respectively using perhydropolysilazane (PHPS) in dibutylether (DBE) over 1, 2 or 3 spray deposition passes. The results of analysis of Examples 12 to 17 are shown in Table 4 including the analysis of nitrogen content of the layer comprising silica and data for the substrates (Subs. 6 and Subs. 10).

**Table 4**

| **Example** | **No. of Passes** | **Nitrogen content (at%)** | **Layer Thickness (nm)** | **Haze (%T)** | **Sheet Resistance (Ω/sq)** | **Visible %T** | **Visible %R** |
|---|---|---|---|---|---|---|---|
| Subs. 6 | 0 | | | 1.46 | 6.07 | 81 | 10.1 |
| 12 | 1 | 1.6 | 38 | 1.01 | 6.05 | 80.6 | 10.2 |
| 13 | 2 | 2.2 | 58 | 0.81 | 6.28 | 83.1 | 8.4 |
| 14 | 3 | 4 | 88 | 0.68 | 5.80 | 84.2 | 7.1 |
| Subs. 10 | 0 | | | 1.05 | 9.12 | 83.1 | 10.4 |
| 15 | 1 | 3.4 | 62 | 0.63 | 9.11 | 83.4 | 10.2 |
| 16 | 2 | 3.5 | 65 | 0.48 | 8.93 | 85.5 | 7.9 |
| 17 | 3 | 2.4 | 85 | 0.39 | 9.03 | 86.8 | 6.9 |

### Electrically Heatable Demonstrators: Example 18, 19 and 20.

Perhydropolysilazane (PHPS) in dibutylether (DBE) was used to apply coatings by spray deposition onto substrates with sheet resistances of 6 Ω/square, 10 Ω/square and 15 Ω/square. An electrical contact was made to the samples and a voltage applied. The temperature of the samples was measured using a temperature probe. The results for each Example are indicated in Table 5.

**Table 5**

| **Example** | **Sheet Resistance of Substrate (Ω/square)** | **Applied Voltage (V)** | **Current (A)** | **Temperature (°C)** |
|---|---|---|---|---|
| 18 | 6 | 42 | 5.1 | 100 |
| | | 48 | 5.8 | 133 |
| 19 | 10 | 42 | 3.4 | 90 |
| | | 48 | 3.9 | 105 |
| 20 | 15 | 42 | 2.6 | 54 |
| | | 48 | 2.9 | 81 |

### Roller Coated Examples

Roller coated examples were produced to evaluate coating thickness and surface roughness as a function of coating solution concentration and roller speed and direction using a Burckle easy-Coater RCL-M 700 Roller Coater. A PHPS silica coating solution was pumped into the channel formed between the doctor roller, application roller and sealing end plates. The solution coated the application roller which in turn applied the solution to the substrate. The substrates were doped tin oxide coated float glass. Prior to coating the substrates were cleaned in a flat-bed washing machine. Following coating the samples were cured either using mercury discharge lamps and/or thermally cured at 200 °C for an hour in a convectively heated oven. The results are presented in Table 6.

**Table 6**

| Ex | Silica Precursor | Solvent | PHPS Coating Solution Concentration (%) | Application Roller Speed (m/min) | Application Roller Direction | AFM Sa (nm) 5x5 micron | SEM Thickness Range (nm) |
|---|---|---|---|---|---|---|---|
| 1 | PHPS | 1:1 Mesitylene :Toluene | 3.0 | 3 | Reverse | 10.8 | 21 to 32 |
| 2 | PHPS | 1:1 Mesitylene :Toluene | 6.7 | 10 | Forward | 7.1 | 20 to 60 |
| 3 | PHPS | 1:1 Mesitylene :Toluene | 6.7 | 3 | Forward | 8.8 | 33 to 59 |
| 4 | PHPS | 1:1 Mesitylene :Toluene | 13.4 | 3 | Forward | 6.4 | 19 to 74 |
| 5 | PHPS | 1:1 Mesitylene :Toluene | 16.0 | 3 | Forward | 6.1 | 12 to 83 |
| 6 | PHPS | 1:1 Mesitylene :Toluene | 18.0 | 3 | Forward | 4.7 | 16 to 86 |
| | Float Glass | -- | -- | -- | -- | 0.3 | -- |

### Slot Die Coated Examples

PHPS slot die coated examples were produced to evaluate coating thickness and roughness as a function of coating solution flow rate using a nTact nDeavor slot die coating system. The coating solution was delivered to a reservoir within a die, the coating solutions exited the die through a narrow slot forming a bead. The die was positioned above the substrate and moved along the substrate to form a coating. The substrates were fluorine doped tin oxide coated float glass, with the fluorine doped tin oxide applied by CVD. Prior to coating with PHPS the fluorine doped tin oxide coated float glass substrates were cleaned in a flat-bed washing machine. Following coating the samples were thermally cured at 200 °C for an hour in a convectively heated oven. The results are presented in Table 7.

**Table 7**

| Ex | Silica Precursor | Solvent | Coating Solution Concentration (%) | Flow Rate (ml/min) | Slot Width (micron) | Die to Substrate Gap (micron) | AFM Sa (nm) 5x5 micron | SEM Thickness Range (nm) |
|---|---|---|---|---|---|---|---|---|
| 1 | PHPS | DBE | 10.0 | 0.7 | 50 | 20 | 9.1 | 13 to 28 |
| 2 | PHPS | DBE | 10.0 | 1.5 | 50 | 40 | 7.9 | 12 to 53 |
| 3 | PHPS | DBE | 10.0 | 2.9 | 50 | 50 | 6.6 | 18 to 50 |
| 4 | PHPS | DBE | 10.0 | 5.8 | 50 | 75 | 4.5 | 16 to 49 |
| 5 | PHPS | DBE | 10.0 | 11.6 | 50 | 100 | 2.3 | 33 to 100 |
| | Float Glass | -- | -- | -- | -- | -- | 0.3 | -- |

### Marking Resistant Demonstrators; Examples 1 to 4

Fluorine doped tin oxide coated glass substrates were over-coated with a layer of silica formed from PHPS by roller coating and slot die coating. The resistance of the PHPS applied silica coating to marking was assessed by manually marking the applied silica coating using pencils and a coin followed by visual inspection of resulting marks. The results are provided in Table 8.

**Table 8**

| Ex | Over-Coating Method | SEM Coating Thickness Range (nm) | AFM Surface Roughness, Sa (nm) | Resistance to Marking |
|---|---|---|---|---|
| | SnO2:F coating only | 0 | 13.6 | Very Low |
| | Float Glass | 0 | 0.3 | - |
| 1 | Slot Die | 16 to 49 | 4.5 | High |
| 2 | Slot Die | 33 to 100 | 2.3 | Very High |
| 3 | Roller | 33 to 59 | 8.8 | High |
| 4 | Roller | 16 to 86 | 4.7 | Very High |
| 5 | Spin | 18 to 28 | 2.4 | High |
| 6 | Spin | 30 to 39 | 1.7 | Very low |
| 7 | Spray | 34 to 38 | 12.3 | Low |
| 8 | Spray | 30 to 32 | 12.0 | Low |

Therefore it can be seen from the results in Table 8 that when a silica layer derived from a polysilazane such as PHPS is provided and cured above a transparent conductive oxide such as fluorine doped tin oxide (SnO₂:F) applied by chemical vapour deposition (CVD) to float glass, not only does the silica layer have an improved smoothing effect on the surface of the transparent conductive oxide but in addition, the silica layer provides an increased level of resistance to marking, especially when the silica layer is applied by a slot die, roller coating, spray coating or spin coating process.

Furthermore, improved levels of resistance to marking by the silica layer are provided when the thickness of the silica layer is between 15 and 110nm.

## Claims

1. A process for producing a coated glass substrate for use in automotive and architectural glazing, the process comprising:
i) providing a glass substrate having at least one surface, the surface having deposited thereon a layer of a transparent conductive material, wherein the transparent conductive material comprises a transparent conductive oxide;
ii) providing a coating composition comprising a polysilazane;
iii) contacting a surface of the layer of transparent conductive material with the coating composition; and
iv) curing the coating composition to form a coating layer on the surface of the transparent conductive material the coating layer comprising silica, and wherein the transparent conductive oxide before deposition of the layer of silica, has an average surface roughness, (Sa1), greater than the average surface roughness, (Sa2), of the silica coated glass substrate, wherein:
the transparent conductive oxide is deposited by chemical vapour deposition (CVD); and
the layer of a transparent conductive material has a sheet resistance in the range 5 Ω/square to 400 Ω/square.

2. A process according to claim 1 wherein the transparent conductive oxide comprises indium tin oxide, doped tin oxide, doped zinc oxide or a mixture of two or more of these oxides; and/or wherein the transparent conductive oxide comprises doped tin oxide, preferably fluorine doped tin oxide.

3. A process as claimed in claim 1 or 2, wherein the coating composition further comprises an aprotic solvent; and/or wherein the solvent comprises a dialkyl ether; and/or wherein the solvent comprises dibutyl ether, toluene, xylene, mesitylene and/or mixtures thereof; and/or
wherein the aprotic solvent comprises dibutyl ether, t-butyl methyl ether, tetrahydrofuran, butane, pentane, hexane, cyclohexane, 1,4-dioxane, toluene, xylene, anisole, mesitylene, 1,2-dimethoxybenzene, diphenyl ether; and/or
wherein the solvent comprises a mixture of two or more solvents selected from dibutyl ether, t-butyl methyl ether, tetrahydrofuran, butane, pentane, hexane, cyclohexane, 1,4-dioxane, toluene, xylene, anisole, mesitylene, 1,2-dimethoxybenzene, diphenyl ether.

4. A process as claimed in any one of the preceding claims wherein the polysilazane comprises a compound of formula [R¹R²Si-NR³]ₙ, wherein R¹, R², and R³ are each independently selected from H or C₁ to C₄ alkyl, and n is an integer; and/or
wherein the polysilazane comprises perhydropolysilazane (PHPS) or methylpolysilazane (MPS).

5. A process as claimed in any one of the preceding claims, wherein the surface of the layer of transparent conductive material is contacted with the coating composition by a method selected from: dip coating; spin coating; roller coating; spray coating; air atomisation spraying; ultrasonic spraying; and/or slot-die coating; preferably wherein the surface of the layer of transparent conductive material is contacted with the coating composition by either spin coating, roller coating, spray coating or slot-die coating and/or combinations thereof.

6. A process as claimed in any one of the preceding claims, further comprising cleaning the surface of the glass substrate and transparent conductive material before contacting the surface of the layer of transparent conductive material with the coating composition; preferably wherein cleaning comprises one or more of: abrasion with ceria, washing with alkaline aqueous solution, deionised water rinse and/or plasma treatment.

7. A process as claimed in any one of the preceding claims, wherein curing the coating composition on the surface of the layer of transparent conductive material comprises irradiating with ultraviolet radiation; and/or
wherein curing of the coating composition on the surface of the layer of transparent conductive material comprises heating to a temperature in the range 90 °C to 650 °C; preferably curing of the coating composition on the surface of the transparent conductive material comprises heating to a temperature in the range 95 °C to 550 °C; more preferably curing of the coating composition on the surface of the transparent conductive material comprises heating to a temperature in the range 110 °C to 500 °C.

8. A process as claimed in any one of the preceding claims, wherein the polysilazane is at a concentration in the range 0.5% to 80% by weight in the coating composition, preferably in the range 0.5% to 20% by weight, more preferably in the range 0.5% to 10% by weight, most preferably in the range 1% to 5% by weight.

9. A process as claimed in any one of the preceding claims, wherein the process is performed so that the layer comprising silica is deposited to a thickness in the range 10 nm to 5 µm, preferably 10 nm to 2.5 µm, or preferably 10 nm to 700 nm, more preferably 10 nm to 600 nm, even more preferably 10 to 200nm and most preferably 10 to 150nm or 20 to 150nm; and/or wherein the layer comprising silica comprises 1 at% to 8 at% nitrogen.

10. A process as claimed in any preceding claim wherein the transparent conductive oxide coating before deposition of the layer of silica, has an average surface roughness, (Sa1), at least 5nm greater than the average surface roughness, (Sa2), of the silica coated glass substrate; and/or wherein the arithmetic mean height of the deposited cured silica layer is less than 50% of the arithmetic mean height of the fluorine doped tin oxide layer; more preferably the arithmetic mean height of the deposited cured silica layer is less than 65% of the arithmetic mean height of the fluorine doped tin oxide layer; and most preferably of the arithmetic mean height of the fluorine doped tin oxide layer less than 70% of arithmetic mean height of the fluorine doped tin oxide layer.

11. A coated glass substrate comprising a layer of transparent conductive oxide and a cured layer of silica deposited on the layer of transparent conductive oxide obtainable by the process of any one of claims 1 to 10.

12. A coated glass substrate according to claim 11 wherein the transparent conductive oxide coating before deposition of the layer of silica, has an average surface roughness, (Sa1), at least 5nm greater than the average surface roughness, (Sa2), of the silica coated glass substrate.

13. A coated glass substrate comprising a layer of fluorine doped tin oxide deposited by chemical vapour deposition wherein a cured layer of silica is deposited on the layer of fluorine doped tin oxide and wherein the arithmetic mean height of the deposited cured silica layer is less than 50% of the arithmetic mean height of the fluorine doped tin oxide layer, more preferably less than 65% and most preferably less than 70% of arithmetic mean height of the fluorine doped tin oxide layer.

14. An automotive glazing comprising a coated glass substrate prepared by the process of claims 1 to 11 or as claimed in any of claims 12 to 14; and/or comprising a cured silica layer with a thickness of between 15 and 100nm, more preferably between 20 and 70nm, even more preferably between 20 and 60nm and most preferably between 20 and 50nm.

15. An architectural glazing comprising a coated glass substrate prepared by the process of claims 1 to 11 or as claimed in any of claims 12 to 14; and/or comprising a cured silica layer with a thickness of between 15 and 100nm, more preferably between 20 and 70nm, even more preferably between 20 and 60nm and most preferably between 20 and 50nm.

## Patentansprüche

1. Verfahren zur Herstellung eines beschichteten Glassubstrats zur Verwendung in Automobil- und Bauglas, wobei das Verfahren umfasst:
i) Bereitstellen eines Glassubstrats mit mindestens einer Oberfläche, wobei auf der Oberfläche eine Schicht aus einem transparenten leitfähigen Material abgeschieden ist, und wobei das transparente leitfähige Material ein transparentes leitfähiges Oxid umfasst;
ii) Bereitstellen einer Beschichtungszusammensetzung, die ein Polysilazan umfasst;
iii) Inkontaktbringen einer Oberfläche der Schicht aus transparentem leitfähigem Material mit der Beschichtungszusammensetzung; und
iv) Aushärten der Beschichtungszusammensetzung, um eine Beschichtungsschicht auf der Oberfläche des transparenten leitfähigen Materials zu bilden, wobei die Beschichtungsschicht Siliciumdioxid enthält und wobei das transparente leitfähige Oxid vor dem Aufbringen der Schicht aus Siliciumdioxid eine durchschnittliche Oberflächenrauigkeit (Sa1) aufweist, die größer ist als die durchschnittliche Oberflächenrauigkeit (Sa2) des mit Siliciumdioxid beschichteten Glassubstrats, wobei
das transparente leitfähige Oxid durch chemische Gasphasenabscheidung (CVD) abgeschieden wird; und
die Schicht aus transparentem leitfähigem Material einen Schichtwiderstand im Bereich von 5 Ω/Quadrat bis 400 Ω/Quadrat aufweist.

2. Verfahren nach Anspruch 1, bei dem das transparente leitfähige Oxid Indium-Zinn-Oxid, dotiertes Zinnoxid, dotiertes Zinkoxid oder eine Mischung aus zwei oder mehr dieser Oxide umfasst;
und/oder bei dem das transparente leitfähige Oxid dotiertes Zinnoxid, vorzugsweise fluordotiertes Zinnoxid, umfasst.

3. Verfahren nach Anspruch 1 oder 2, bei dem die Beschichtungszusammensetzung ferner ein aprotisches Lösungsmittel umfasst; und/oder bei dem das Lösungsmittel einen Dialkylether umfasst; und/oder bei dem das Lösungsmittel Dibutylether, Toluol, Xylol, Mesitylen und/oder Gemische davon umfasst; und/oder
bei dem das aprotische Lösungsmittel Dibutylether, t-Butylmethylether, Tetrahydrofuran, Butan, Pentan, Hexan, Cyclohexan, 1,4-Dioxan, Toluol, Xylol, Anisol, Mesitylen, 1,2-Dimethoxybenzol, Diphenylether umfasst; und/oder
bei dem das Lösungsmittel ein Gemisch aus zwei oder mehr Lösungsmitteln umfasst, ausgewählt aus Dibutylether, t-Butylmethylether, Tetrahydrofuran, Butan, Pentan, Hexan, Cyclohexan, 1,4-Dioxan, Toluol, Xylol, Anisol, Mesitylen, 1,2-Dimethoxybenzol, Diphenylether.

4. Verfahren nach einem der vorhergehenden Ansprüche, bei dem das Polysilazan eine Verbindung der Formel [R¹R²Si-NR³]ₙ umfasst, wobei R¹, R² und R³ jeweils unabhängig voneinander aus H oder C₁ bis C₄-Alkyl ausgewählt sind und n eine ganze Zahl ist; und/oder
bei dem das Polysilazan Perhydropolysilazan (PHPS) oder Methylpolysilazan (MPS) umfasst.

5. Verfahren nach einem der vorhergehenden Ansprüche, bei dem die Oberfläche der Schicht aus transparentem leitfähigem Material mit der Beschichtungszusammensetzung durch ein Verfahren in Kontakt gebracht wird, das ausgewählt ist aus: Tauchbeschichten; Spin-Beschichten; Walzenbeschichten; Sprühbeschichten; Luftzerstäubungssprühen; Ultraschallsprühen; und/oder Schlitzdüsenbeschichten; wobei vorzugsweise die Oberfläche der Schicht aus transparentem leitfähigem Material mit der Beschichtungszusammensetzung durch entweder Spin-Beschichten, Walzenbeschichten, Sprühbeschichten oder Schlitzdüsenbeschichten und/oder Kombinationen davon in Kontakt gebracht wird.

6. Verfahren nach einem der vorhergehenden Ansprüche, das ferner das Reinigen der Oberfläche des Glassubstrats und des transparenten leitfähigen Materials vor dem Inkontaktbringen der Oberfläche der Schicht aus transparentem leitfähigem Material mit der Beschichtungszusammensetzung umfasst; wobei das Reinigen vorzugsweise eines oder mehrere von Abschleifen mit Ceroxid, Waschen mit einer alkalischen wässrigen Lösung, Spülen mit entionisiertem Wasser und/oder einer Plasmabehandlung umfasst.

7. Verfahren nach einem der vorstehenden Ansprüche, bei dem das Aushärten der Beschichtungszusammensetzung auf der Oberfläche der Schicht aus transparentem leitfähigem Material das Bestrahlen mit ultravioletter Strahlung umfasst; und/oder
das Aushärten der Beschichtungszusammensetzung auf der Oberfläche der Schicht aus transparentem leitfähigem Material das Erhitzen auf eine Temperatur im Bereich von 90 °C bis 650 °C umfasst; vorzugsweise bei dem das Aushärten der Beschichtungszusammensetzung auf der Oberfläche des transparenten leitfähigen Materials das Erhitzen auf eine Temperatur im Bereich von 95 °C bis 550 °C umfasst; noch bevorzugter bei dem das Aushärten der Beschichtungszusammensetzung auf der Oberfläche des transparenten leitfähigen Materials das Erhitzen auf eine Temperatur im Bereich von 110 °C bis 500 °C umfasst.

8. Verfahren nach einem der vorhergehenden Ansprüche, bei dem das Polysilazan in der Beschichtungszusammensetzung in einer Konzentration im Bereich von 0,5 Gew.-% bis 80 Gew.-%, vorzugsweise im Bereich von 0,5 Gew.-% bis 20 Gew.-%, noch bevorzugter im Bereich von 0,5 Gew.-% bis 10 Gew.-% und am meisten bevorzugt im Bereich von 1 Gew.-% bis 5 Gew.-% vorliegt.

9. Verfahren nach einem der vorhergehenden Ansprüche, wobei das Verfahren so durchgeführt wird, dass die Siliciumdioxid enthaltende Schicht in einer Dicke im Bereich von 10 nm bis 5 µm, vorzugsweise 10 nm bis 2,5 µm oder vorzugsweise 10 nm bis 700 nm, noch bevorzugter 10 nm bis 600 nm, noch bevorzugter 10 bis 200 nm und am meisten bevorzugt 10 bis 150 nm oder 20 bis 150 nm abgeschieden wird;
und/oder bei dem die Siliciumdioxid umfassende Schicht 1 at% bis 8 at% Stickstoff umfasst.

10. Verfahren nach einem der vorhergehenden Ansprüche, bei dem die transparente leitfähige Oxidbeschichtung vor dem Abscheiden der Siliciumdioxidschicht eine durchschnittliche Oberflächenrauigkeit (Sa1) aufweist, die mindestens 5 nm größer ist als die durchschnittliche Oberflächenrauigkeit (Sa2) des mit Siliciumdioxid beschichteten Glassubstrats;
und/oder bei dem die arithmetisch mittlere Höhe der abgeschiedenen ausgehärteten Siliciumdioxidschicht weniger als 50 % der arithmetisch mittleren Höhe der fluordotierten Zinnoxidschicht beträgt; vorzugsweise bei dem die arithmetisch mittlere Höhe der abgeschiedenen ausgehärteten Siliciumdioxidschicht weniger als 65 % der arithmetisch mittleren Höhe der fluordotierten Zinnoxidschicht beträgt; und meistbevorzugt die arithmetisch mittlere Höhe der fluordotierten Zinnoxidschicht weniger als 70 % der arithmetisch mittleren Höhe der fluordotierten Zinnoxidschicht beträgt.

11. Beschichtetes Glassubstrat, umfassend eine Schicht aus transparentem leitfähigem Oxid und eine gehärtete Schicht aus Siliziumdioxid, die auf der Schicht aus transparentem leitfähigem Oxid abgeschieden ist, erhältlich durch das Verfahren nach einem der Ansprüche 1 bis 10.

12. Beschichtetes Glassubstrat nach Anspruch 11, bei dem die transparente leitfähige Oxidbeschichtung vor der Abscheidung der Siliciumdioxidschicht eine durchschnittliche Oberflächenrauigkeit (Sa1) aufweist, die mindestens 5 nm größer ist als die durchschnittliche Oberflächenrauigkeit (Sa2) des mit Siliciumdioxid beschichteten Glassubstrats.

13. Beschichtetes Glassubstrat, umfassend eine durch chemische Gasphasenabscheidung abgeschiedene Schicht aus fluordotiertem Zinnoxid, wobei eine gehärtete Siliciumdioxidschicht auf der Schicht aus fluordotiertem Zinnoxid abgeschieden ist und wobei die arithmetisch mittlere Höhe der abgeschiedenen gehärteten Siliciumdioxidschicht weniger als 50 % der arithmetisch mittleren Höhe der fluordotierten Zinnoxidschicht beträgt, vorzugsweise weniger als 65 % und am bevorzugtesten weniger als 70 % der arithmetischen mittleren Höhe der mit Fluor dotierten Zinnoxidschicht beträgt.

14. Automobilglas, umfassend ein beschichtetes Glassubstrat, hergestellt nach dem Verfahren nach den Ansprüchen 1 bis 11, oder nach einem der Ansprüche 12 bis 14; und/oder umfassend eine gehärtete Siliciumdioxidschicht mit einer Dicke zwischen 15 und 100 nm, vorzugsweise zwischen 20 und 70 nm, noch bevorzugter zwischen 20 und 60 nm und am meisten bevorzugt zwischen 20 und 50 nm.

15. Bauglas, umfassend ein beschichtetes Glassubstrat, hergestellt nach dem Verfahren nach den Ansprüchen 1 bis 11, oder nach einem der Ansprüche 12 bis 14; und/oder umfassend eine gehärtete Siliciumdioxidschicht mit einer Dicke zwischen 15 und 100 nm, vorzugsweise zwischen 20 und 70 nm, noch bevorzugter zwischen 20 und 60 nm und am meisten bevorzugt zwischen 20 und 50 nm.

## Revendications

1. Procédé de production d'un substrat de verre revêtu pour une utilisation dans des vitrages automobiles et architecturaux, le procédé comprenant :
i) la fourniture d'un substrat en verre ayant au moins une surface, la surface comportant une couche d'un matériau conducteur transparent déposée sur elle, dans lequel le matériau conducteur transparent comprend un oxyde conducteur transparent ;
ii) la fourniture d'une composition de revêtement comprenant un polysilazane ;
iii) la mise en contact d'une surface de la couche de matériau conducteur transparent avec la composition de revêtement ; et
iv) le durcissement de la composition de revêtement pour former une couche de revêtement sur la surface du matériau conducteur transparent, la couche de revêtement comprenant de la silice, et dans lequel l'oxyde conducteur transparent, avant le dépôt de la couche de silice, présente une rugosité de surface moyenne, (Sa1), supérieure à la rugosité de surface moyenne, (Sa2), du substrat en verre revêtu de silice, dans lequel
l'oxyde conducteur transparent est déposé par dépôt chimique en phase vapeur (CVD) ; et
la couche d'un matériau conducteur transparent présente une résistance de couche dans la plage de 5 Ω/carré à 400 Ω/carré.

2. Procédé selon la revendication 1, dans lequel l'oxyde conducteur transparent comprend de l'oxyde d'indium et d'étain, de l'oxyde d'étain dopé, de l'oxyde de zinc dopé ou un mélange de deux ou plus de ces oxydes ; et/ou dans lequel l'oxyde conducteur transparent comprend de l'oxyde d'étain dopé, de préférence de l'oxyde d'étain dopé au fluor.

3. Procédé selon la revendication 1 ou 2, dans lequel la composition de revêtement comprend en outre un solvant aprotique ; et/ou dans lequel le solvant comprend un éther dialkylique ; et/ou dans lequel le solvant comprend de l'éther dibutylique, du toluène, du xylène, du mésitylène et/ou des mélanges de ceux-ci ; et/ou
dans lequel le solvant aprotique comprend de l'éther dibutylique, de l'éther t-butylméthylique, du tétrahydrofurane, du butane, du pentane, de l'hexane, du cyclohexane, du 1,4-dioxane, du toluène, du xylène, de l'anisole, du mésitylène, du 1,2-diméthoxybenzène, de l'éther diphénylique ; et/ou
dans lequel le solvant comprend un mélange de deux solvants ou plus choisis parmi l'éther dibutylique, l'éther t-butylméthylique, le tétrahydrofurane, le butane, le pentane, l'hexane, le cyclohexane, le 1,4-dioxane, le toluène, le xylène, l'anisole, le mésitylène, le 1,2-diméthoxybenzène et l'éther diphénylique.

4. Procédé selon l'une quelconque des revendications précédentes, dans lequel le polysilazane comprend un composé de formule [R¹R²Si-NR₃]_{n,} dans laquelle R¹, R² et R³ sont chacun indépendamment choisis parmi H ou un alkyle en C₁ à C₄, et n est un nombre entier ; et/ou
dans lequel le polysilazane comprend du perhydropolysilazane (PHPS) ou du méthylpolysilazane (MPS).

5. Procédé selon l'une quelconque des revendications précédentes, dans lequel la surface de la couche de matériau conducteur transparent est mise en contact avec la composition de revêtement par un procédé choisi parmi : le revêtement par immersion ; le revêtement par centrifugation ; le revêtement au rouleau ; le revêtement par pulvérisation ; la pulvérisation par atomisation à l'air ; la pulvérisation par ultrasons ; et/ou le revêtement par filière à fente ; de préférence dans lequel, la surface de la couche de matériau conducteur transparent est mise en contact avec la composition de revêtement par revêtement par centrifugation, revêtement au rouleau, revêtement par pulvérisation ou revêtement par filière à fente et/ou des combinaisons de ceux-ci.

6. Procédé selon l'une quelconque des revendications précédentes, comprenant en outre le nettoyage de la surface du substrat en verre et du matériau conducteur transparent avant la mise en contact de la surface de la couche de matériau conducteur transparent avec la composition de revêtement ; de préférence, dans lequel le nettoyage comprend une ou plusieurs des méthodes suivantes : l'abrasion à l'oxyde de cérium, le lavage avec une solution aqueuse alcaline, le rinçage à l'eau déionisée et/ou le traitement au plasma.

7. Procédé selon l'une quelconque des revendications précédentes, dans lequel le durcissement de la composition de revêtement sur la surface de la couche de matériau conducteur transparent comprend une irradiation par rayonnement ultraviolet ; et/ou
dans lequel le durcissement de la composition de revêtement sur la surface de la couche de matériau conducteur transparent comprend un chauffage à une température dans la plage de 90 °C à 650 °C ; de préférence, le durcissement de la composition de revêtement sur la surface du matériau conducteur transparent comprend un chauffage à une température dans la plage de 95 °C à 550 °C ; plus préférablement, le durcissement de la composition de revêtement sur la surface du matériau conducteur transparent comprend un chauffage à une température dans la plage de 110 °C à 500 °C.

8. Procédé selon l'une quelconque des revendications précédentes, dans lequel le polysilazane est présent à une concentration dans la plage de 0,5 % à 80 % en poids dans la composition de revêtement, de préférence dans la plage de 0,5 % à 20 % en poids, plus préférablement dans la plage de 0,5 % et 10 % en poids, et au mieux dans la plage de 1 % à 5 % en poids.

9. Procédé selon l'une quelconque des revendications précédentes, dans lequel le procédé est réalisé de telle sorte que la couche comprenant de la silice soit déposée sur une épaisseur dans la plage de 10 nm à 5 µm, de préférence de 10 nm à 2,5 µm, ou de préférence de 10 nm à 700 nm, plus préférablement de 10 nm à 600 nm, plus préférablement encore de 10 à 200 nm, et au mieux de 10 à 150 nm ou de 20 et 150 nm ; et/ou dans lequel la couche comprenant de la silice comprend de 1 % atomique à 8 % atomique d'azote.

10. Procédé selon l'une quelconque des revendications précédentes, dans lequel le revêtement d'oxyde conducteur transparent, avant le dépôt de la couche de silice, présente une rugosité moyenne de surface, (Sa1), supérieure d'au moins 5 nm à la rugosité de surface moyenne, (Sa2), du substrat en verre revêtu de silice ; et/ou dans lequel la hauteur moyenne arithmétique de la couche de silice déposée durcie est inférieure à 50 % de la hauteur moyenne arithmétique de la couche d'oxyde d'étain dopé au fluor ; plus préférablement, la hauteur moyenne arithmétique de la couche de silice déposée durcie est inférieure à 65 % de la hauteur moyenne arithmétique de la couche d'oxyde d'étain dopé au fluor ; et au mieux, la hauteur moyenne arithmétique de la couche d'oxyde d'étain dopé au fluor est inférieure à 70 % de la hauteur moyenne arithmétique de la couche d'oxyde d'étain dopé au fluor.

11. Substrat en verre revêtu comprenant une couche d'oxyde conducteur transparent et une couche durcie de silice déposée sur la couche d'oxyde conducteur transparent, pouvant être obtenu par le procédé selon l'une quelconque des revendications 1 à 10.

12. Substrat en verre revêtu selon la revendication 11, dans lequel le revêtement d'oxyde conducteur transparent, avant le dépôt de la couche de silice, présente une rugosité de surface moyenne, (Sa1), supérieure d'au moins 5 nm à la rugosité de surface moyenne, (Sa2), du substrat en verre revêtu de silice.

13. Substrat en verre revêtu comprenant une couche d'oxyde d'étain dopé au fluor déposée par dépôt chimique en phase vapeur, dans lequel une couche durcie de silice est déposée sur la couche d'oxyde d'étain dopé au fluor et dans lequel la hauteur moyenne arithmétique de la couche de silice déposée durcie est inférieure à 50 % de la hauteur moyenne arithmétique de la couche d'oxyde d'étain dopé au fluor, plus préférablement inférieure à 65 % et au mieux inférieure à 70 % de la hauteur moyenne arithmétique de la couche d'oxyde d'étain dopé au fluor.

14. Vitrage automobile comprenant un substrat en verre revêtu préparé selon le procédé des revendications 1 à 11 ou selon l'une quelconque des revendications 12 à 14 ; et/ou comprenant une couche de silice durcie d'une épaisseur comprise entre 15 et 100 nm, plus préférablement entre 20 et 70 nm, plus préférablement encore entre 20 et 60 nm et au mieux entre 20 et 50 nm.

15. Vitrage architectural comprenant un substrat en verre revêtu préparé selon le procédé des revendications 1 à 11 ou selon l'une quelconque des revendications 12 à 14 ; et/ou comprenant une couche de silice durcie d'une épaisseur comprise entre 15 et 100 nm, plus préférablement entre 20 et 70 nm, plus préférablement encore entre 20 et 60 nm et au mieux entre 20 et 50 nm.
